# EUROPEAN PATENT APPLICATION

(11) **EP 1 939 996 A2**
(43) Date of publication of application: **02.07.2008**
(21) Application number: 07123507.1
(22) Date of filing: 18.12.2007
(51) Int. Cl.: H02H 1/00

(54) **Method for coordination study for protective devices with dynamic settings, multiple functions and multiple setting groups**

(30) Priority: 28.12.2006 US 646978
(71) Applicant: General Electric Company, Schenectady, NY 12345 (US)
(72) Inventor: Papallo, Thomas Frederick Jr.,, Farmington, CT 06032 (US); Valdes, Marcelo Esteban, Burlington, CT 06013 (US)
(74) Representative: Bedford, Grant Richard

(57) **Abstract**

A circuit protection system (28) is provided in a circuit (10, 105) to protect power switches (14, 415, 420) from fault conditions using the protective algorithms (200). The algorithms (200) to control a response of said power switches to fault conditions to protect said circuit. The protective response of the power switches to a fault condition is displayed using the algorithms. The response enables the released energy from a fault condition to be minimized.

## Description

This disclosure relates generally to power distribution systems and moreparticularly, to a methodology using a protective algorithm for displaying a graphical representation of a protective response in the event of a fault condition for a circuit protection system.

In power distribution systems, power is distributed to various loads and is typically divided into branch circuits, which supply power to specified loads. The branch circuits can also be connected to other power distribution equipment.

Due to the concern of an abnormal power condition in the system, i.e., a fault, it is known to provide circuit protective devices or power switching devices, e.g., circuit breakers, to protect the circuit. The circuit breakers seek to prevent or minimize damage and typically function automatically. The circuit breakers also seek to minimize the extent and duration of electrical service interruption in the event of a fault.

It is further known to open and close these circuit breakers based upon statically defined zones of protection within the configuration of the power distribution system. The contemporary protection system applies algorithms based upon electrical properties of these statically defined zones and clears the fault through the use of circuit breakers disposed within the statically defined zones of protection.

Such a contemporary system; however, does not have a mechanism for showing system operators how the zone will internally respond in the event of a fault to protect the system in the most efficient and safe manner. Such methods of showing protective scenarios are static, single protection cases that do not show the total scope of the adaptive process. Further contemporary systems do not have a way of minimizing potential harm to equipment or personnel by minimizing the released energy in the event of a fault. Additionally, contemporary systems do not have a way of providing a rapid backup when a component fails that minimizes released energy and the likelihood of injury within a zone.

Accordingly, there is a need for a methodology using a protective algorithm to provide a graphical display of the adaptive protective response of the protective devices of power distribution system as they adapt to fault conditions.

In one aspect according to the present invention, a method of displaying how a protective algorithm protects a power circuit having power switching devices is provided. The method comprises displaying the ouput/results of a protective algorithm during a fault condition or a series of fault conditions using the protective algorithm.

In another aspect of the method, the user is able to define specific power device settings for the bus and load conditions and to cause the protective function characteristics to change using a protective algorithm. By changing bus and load conditions, the new trip curves will automatically be modified using the protective algorithm when load conditions are exceeded.

In yet another aspect, in the event of a component fault, the protective algorithm trips the component and delays the main switch to let the component clear.

In yet another aspect, a method of protecting a circuit having power switching uses a protective algorithm to provide more effective and timely backup of feeder and bus faults to protect equipment and personnel.

In a further aspect, a method of reducing incident energy is also achieved by selectively tripping the breaker at a lower current level, than is possible when using a non-selective algorithm.

A method of protecting a circuit having power switching devices is also provided. The method has the steps of defining a set of characteristics representing threshold values for power switches in a circuit and inputting fault conditions that exceed the threshold values. The method uses algorithms to control a response of the power switches to the fault conditions to protect the circuit. The method displaying the response of the power switches to the fault condition, wherein a display represents a protective response of the switching devices controlled by the algorithms.

he above-described and other features and advantages of the present disclosure will be appreciated and understood by those skilled in the art from the following detailed description and drawings in which:
Figure 1 illustrates a schematic representation of a power distribution system;
Figure 2 illustrates a schematic representation of a multiple source power distribution system;
Fig. 3 illustrates a schematic representation of a portion of a power distribution system;
Figure 4 illustrates a static time trip curve representing the methodology of the static known algorithm to describe system behavior of the protection system of FIG.3;
Figure 5 illustrates a static trip time curve attempting to show the adaptive protective function of a bus fault, according to known algorithms;
Figure 6 illustrates the methodology that shows the adaptive protective function according to various embodiments of the present invention;
Figure 7 is illustrates the methodology that shows adaptive and multiple protective function according to various embodiments of the present invention;
Figure 8 illustrates the incident energy of static protective devices of known algorithms; and
Figure 9 is a illustrates incident energy of dynamic protective devices according to the methodology of various embodiments of the present invention.

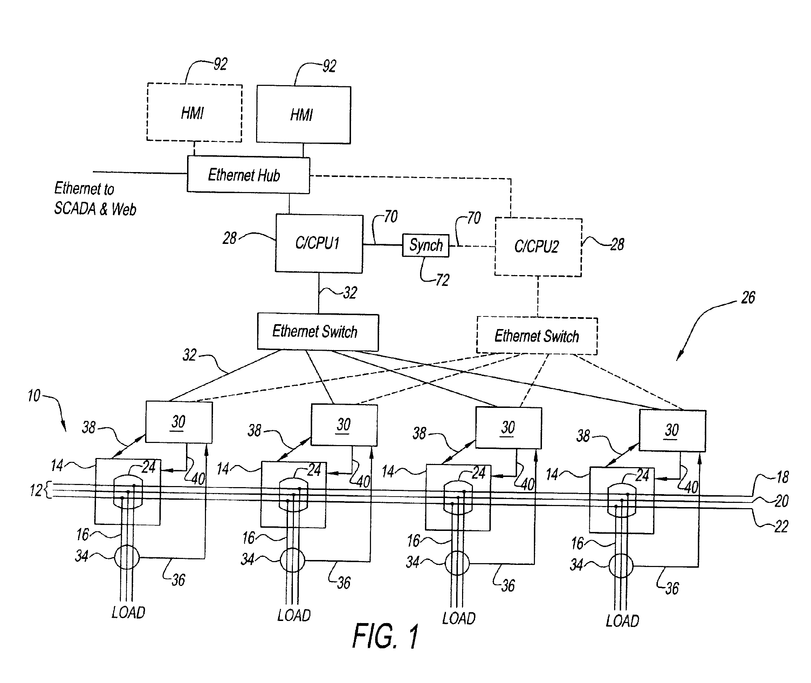

Referring now to the drawings and in particular to FIG. 1, an exemplary embodiment of a power distribution system generally referred to by reference numeral 10 is illustrated. System 10 distributes power from at least one power bus 12 through a number or plurality of power switching devices or circuit breakers 14 to branch circuits 16.

Power bus 12 is illustrated by way of example as a three-phase power system having a first phase 18, a second phase 20, and a third phase 22. Power bus 12 can also include a neutral phase (not shown). System 10 is illustrated for purposes of clarity distributing power from power bus 12 to four circuits 16 by four breakers 14. Of course, it is contemplated by the present disclosure for power bus 12 to have any desired number of phases and/or for system 10 to have any desired number of circuit breakers 14 and any topology of circuit breakers, e.g., in series, or in parallel, or other combinations.

Each circuit breaker 14 has a set of separable contacts 24 (illustrated schematically). Contacts 24 selectively place power bus 12 in communication with at least one load (also illustrated schematically) on circuit 16. The load can include devices, such as, but not limited to, motors, welding machinery, computers, heaters, air conditioners, lighting, and/or other electrical equipment.

Power distribution system 10 is illustrated in FIG. 1 with an exemplary embodiment of a centrally controlled and fully integrated protection, monitoring, and control system 26 (hereinafter "system"). System 26 is configured to control and monitor power distribution system 10 from a central control processing unit 28 (hereinafter "CCPU"). CCPU 28 communicates with a number or plurality of data sample and transmission modules 30 (hereinafter "module") over a data network 32. Network 32 communicates all of the information from all of the modules 30 substantially simultaneously to CCPU 28.

Thus, system 26 can include protection and control schemes that consider the value of electrical signals, such as current magnitude and phase, at one or all circuit breakers 14. Further, system 26 integrates the protection, control, and monitoring functions of the individual breakers 14 of power distribution system 10 in a single, centralized control processor (e.g., CCPU 28). System 26 provides CCPU 28 with all of a synchronized set of information available through digital communication with modules 30 and circuit breakers 14 on network 32 and provides the CCPU with the ability to operate these devices based on this complete set of data.

A protective algorithm 200 of various embodiments of the present invention is used to protect system 26. The purpose of algorithm 200 is to protect devices, such as, but not limited to, motors, welding machinery, computers, heaters, air conditioners, lighting, and/or other electrical equipment in the event of a fault of a power device such as a bus, or a feeder on network 32. When a load on a bus or a breaker is exceeded, protective circuit breakers 14 are activated. The protective algorithm 200 is configured to accept user defined settings for circuit breakers 14 to permit the protective functions enabled by algorithm 200 to occur. The CCPU 28 enables algorithms 200 to accept user defined inputs for settings for threshold values of time and/or current for circuit breaker 14. These values are inputted by maintenance personnel or any other network operators to obtain a graphical representation of the protective action permitted by protective algorithm 200.

As shown in FIG. 1, each module 30 is in communication with one of the circuit breakers 14. Each module 30 is also in communication with at least one sensor 34 sensing a condition or electrical parameter of the power in each phase (e.g., first phase 18, second phase 20, third phase 22, and neutral) of bus 12 and/or circuit 16. Sensors 34 can include current transformers (CTs), potential transformers (PTs), and any combination thereof. Sensors 34 monitor a condition or electrical parameter of the incoming power in circuits 16 and provide a first or parameter signal 36 representative of the condition of the power to module 30. For example, sensors 34 can be current transformers that generate a secondary current proportional to the current in circuit 16 so that first signals 36 are the secondary current.

Module 30 sends and receives one or more second signals 38 to and/or from circuit breaker 14. Second signals 38 can be representative of one or more conditions of breaker 14, such as, but not limited to, a position or state of separable contacts 24, a spring charge switch status, a lockout state or condition, and others. In addition, module 30 is configured to operate or actuate circuit breaker 14 by sending one or more third signals 40 to the breaker to open/close separable contacts 24 as desired, such as open/close commands or signals.

System 26 utilizes data network 32 for data acquisition from modules 30 and data communication to the modules. Accordingly, network 32 is configured to provide a desired level of communication capacity and traffic management between CCPU 28 and modules 30. In an exemplary embodiment, network 32 can be configured to not enable communication between modules 30 (i.e., no module-to-module communication).

In addition, system 26 can be configured to provide a consistent fault response time.

As used herein, the fault response time of system 26 is defined as the time between when a fault condition occurs and the time module 30 issues a trip command to its associated breaker 14. In an exemplary embodiment, system 26 has a fault response time that is less than a single cycle of the 60 Hz (hertz) waveform. For example, system 26 can have a maximum fault response time of about three milliseconds.

The configuration and operational protocols of network 32 are configured to provide the aforementioned communication capacity and response time. For example, network 32 can be an Ethernet network having a star topology as illustrated in FIG. 1. In this embodiment, network 32 is a full duplex network having the collision-detection multiple-access (CSMA/CD) protocols typically employed by Ethernet networks removed and/or disabled. Rather, network 32 is a switched Ethernet for preventing collisions.

CCPU 28 can perform branch circuit protection, zone protection, and relay protection interdependently because all of the system information is in one central location, namely at the CCPU. In addition, CCPU 28 can perform one or more monitoring functions on the centrally located system information. Accordingly, system 26 provides a coherent and integrated protection, control, and monitoring methodology not considered by prior systems. For example, system 26 integrates and coordinates load management, feed management, system monitoring, and other system protection functions in a low cost and easy to install system.

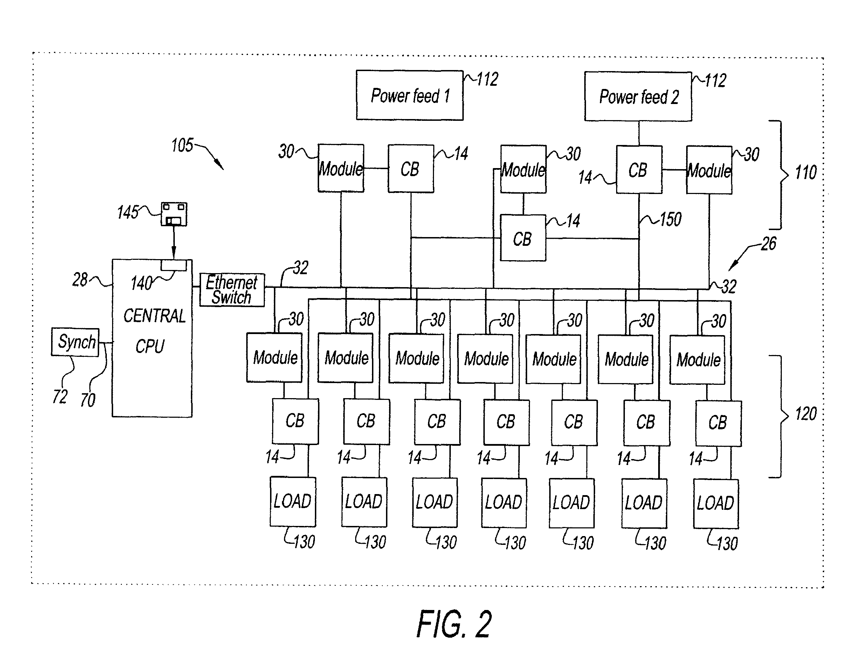

Referring to FIG. 2, an exemplary embodiment of a multi-source, multi-tier power distribution system generally referred to by reference numeral 105 is illustrated with features similar to the features of FIG. 1 being referred to by the same reference numerals. System 105 distributes power from at least one power feed 112, in this embodiment a first and second power feed, through a power distribution bus 150 to a number or plurality of circuit breakers 14 and to a number or plurality of loads 130. CCPU 28 can include a data transmission device 140, such as, for example, a CD-ROM drive or floppy disk drive, for reading data or instructions from a medium 145, such as, for example, a CD-ROM or floppy disk.

Circuit breakers 14 are arranged in a layered, multi-leveled or multi-tiered configuration with a first level 110 of circuit breakers and a second level 120 of circuit breakers. Of course, any number of levels or configuration of circuit breakers 14 can be used with system 105. The layered configuration of circuit breakers 14 provides for circuit breakers in first level 110 which are upstream of circuit breakers in second level 120. In the event of an abnormal condition of power in system 105, i.e., a fault, protection system 26 seeks to coordinate the system by attempting to clear the fault with the nearest circuit breaker 14 upstream of the fault. Circuit breakers 14 upstream of the nearest circuit breaker to the fault remain closed unless the downstream circuit breaker is unable to clear the fault. Protection system 26 can be implemented for any abnormal condition or parameter of power in system 105, such as, for example, long time, short time or instantaneous overcurrents, or excessive ground currents.

In order to provide the circuit breaker 14 nearest the fault with sufficient time to attempt to clear the fault before the upstream circuit breaker is opened, the upstream circuit breaker is provided with an open command at an adjusted or dynamic delay time. The upstream circuit breaker 14 is provided with an open command at a modified dynamic delay time that elapses before the circuit breaker is opened. In an exemplary embodiment, the modified dynamic delay time for the opening of the upstream circuit breaker 14 is based upon the location of the fault in system 105. Preferably, the modified dynamic delay time for the opening of the upstream circuit breaker 14 is based upon the location of the fault with respect to the circuit breakers and/or other devices and topology of system 105.

Protection system 26 can provide open commands at modified dynamic delay times for upstream circuit breakers 14 throughout power distribution system 105 depending upon where the fault has been detected in the power flow hierarchy and the modified dynamic delay times for the opening of each of these circuit breakers can preferably be over an infinite range. Protection system 26 has CCPU that is configured with algorithm 200 of various embodiments of the instant invention to provide adaptive circuit protection for circuit breakers 14. Protection system 26 reduces the clearing time of faults because CCPU 28 provides open commands at modified dynamic delay times for the upstream circuit breakers 14 which are optimum time periods based upon the location of the fault. It has been found that the clearing time of faults has been reduced by approximately 50% with the use of protection system 26, as compared to the use of contemporary systems.

CCPU 28 coordinates protection system 26 by causing the circuit breaker 14 nearest to the fault to clear the fault. Protection system 26 variably adjusts the dynamic delay time for opening of the upstream circuit breakers 14 to provide backup protection for the downstream circuit breaker nearest the fault. In the event that the downstream circuit breaker 14 nearest the fault is unable to clear the fault, the next upstream circuit breaker will attempt to clear the fault with minimal additional delay based upon its modified dynamic delay time. This reduces system stress, damage and potential arc energy exposure of operating and service personnel while maintaining selectivity.

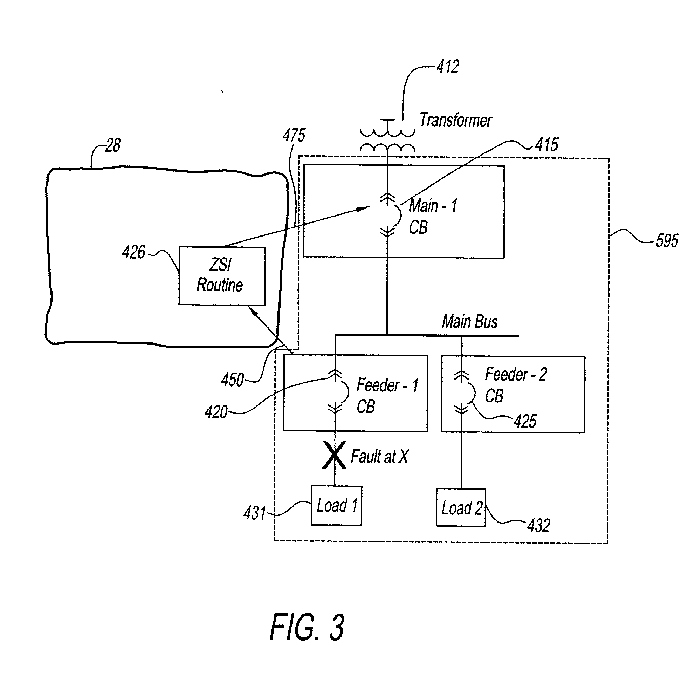

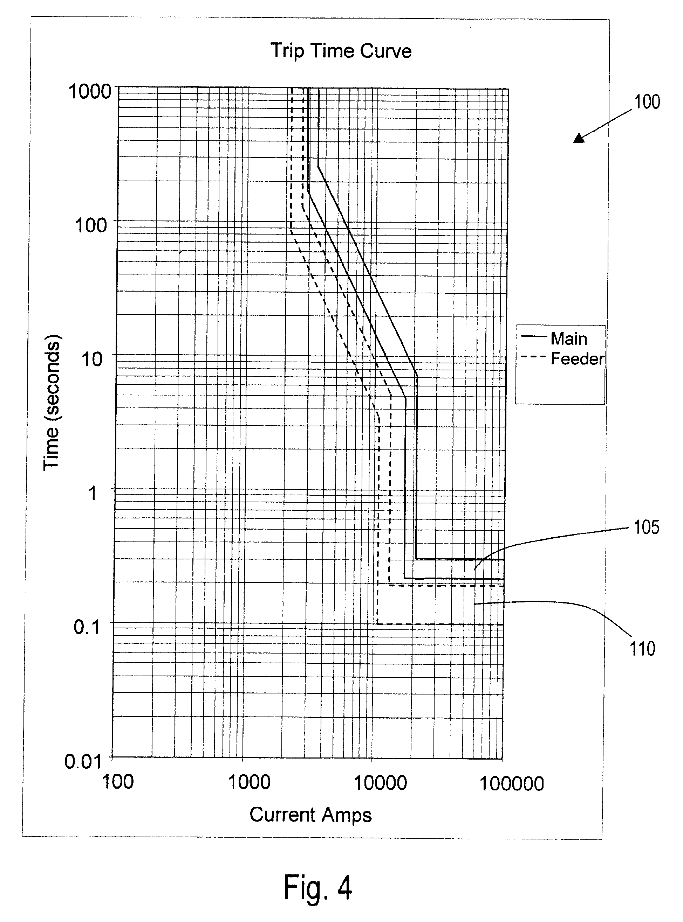

Referring to Fig. 4, a static representation of two protective device trip time curves representing a protective function are shown, and generally referred to by reference numeral 100. Graph 100 represents the response of a power system to a feeder fault as shown in Fig 3. Graph 100 of Fig. 3 illustrates a system substantially similar to the system of Figs. 1 and 2. Graph 100 the shows curve 105 representing the protective response of main breaker and curve 110 representing the response of feeder breaker. Both curves 105 and 110 are static and respond to all fault conditions in an identical fashion. Graph 100 represents a main breaker 415 and a feeder breaker where the feeder breaker is intended to trip while the main breaker 415 remains closed. Because these curves are static, if there is a bus fault in the equipment or the feeder breaker 420 compartment, the main breaker 415 will trip at the static delay time, and not earlier, thus releasing more energy than necessary. Should the feeder breaker 420 not activate, the main breaker 415 would trip at a much higher energy level because the system cannot often adjust to dynamic conditions.

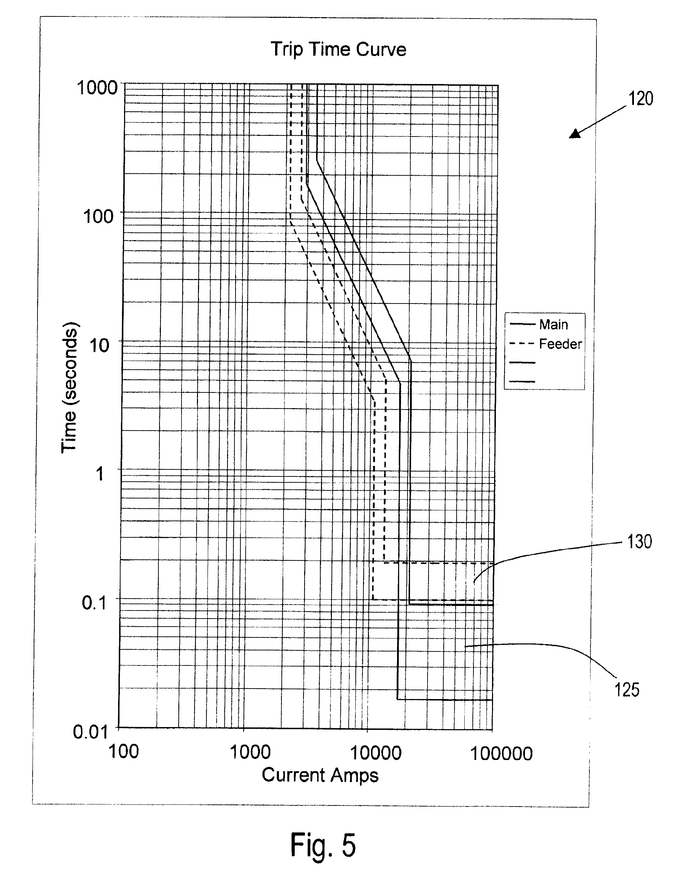

Referring to Fig. 5, a graph representing a static trip time curve of an adaptive protective function in the event of a bus fault, is shown and generally represented by reference numeral 120. Fig. 5 represents the scenario in which there is a bus fault as opposed to a feeder fault of Fig. 3. Main curve 125 and feeder curve 130 are shown at their default delays. The main breaker is shown as tripping more rapidly than the feeder thus showing the devices to be non-selective. This graph gives the impression that the main and feeder are not selective.

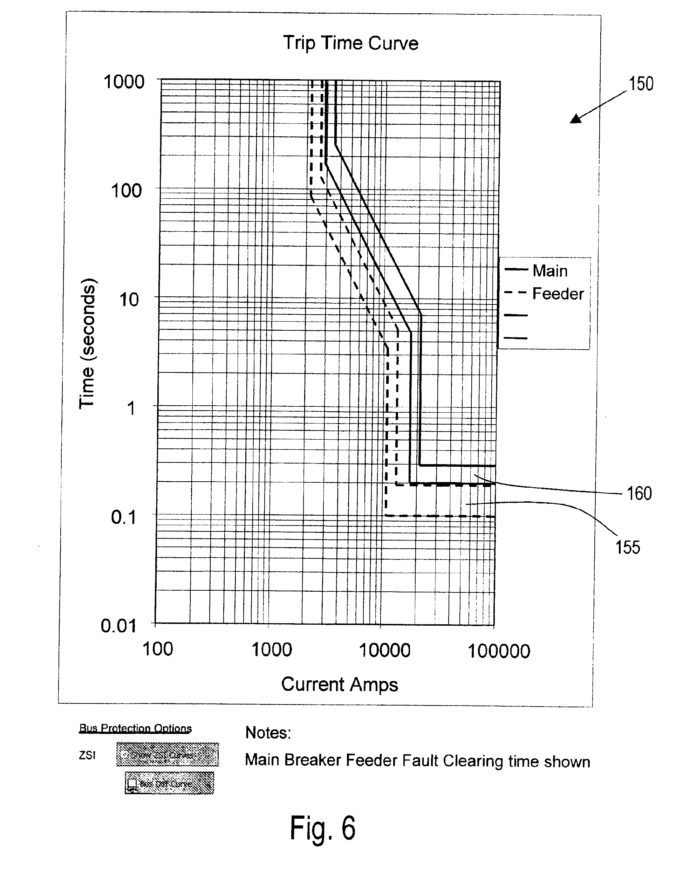

Referring to Fig. 6, a graph representing a protective mode of various embodiments of the present invention is called Zone Selective Interlock (ZSI), a protective function in low voltage equipment, is shown and generally referred to by reference numeral 150. According to various embodiments of the present invention, the ZSI mode is selected from a user interface that permits selective functioning depending upon whether or not the fault is a feeder or a bus fault. In an exemplary embodiment, the ZSI routine is performed at CCPU 28 and interacts with the individual protection functions for each module 30, which are also determined at the CCPU. The ZSI routine could also use pre-set clearing times for circuit breakers 14 or the clearing times for the circuit breakers could be determined by CCPU 28 based on the physical hardware, which is known by the CCPU. The CCPU 28 effectively knows the topology of power distribution system 105, which allows the CCPU to open the circuit breakers 14 at an infinite range of times.

In Fig. 6, graph 150 shows the scenario when a feeder fault occurs. The main delay is automatically adjusted to allow the feeder to clear the fault first as shown by curve 155. Should the fault not be cleared by the feeder, the main breaker is automatically tripped to ensure that the feeder breaker is backed up, immediately thereafter, as shown by curve 160. ZSI is a protective function that reduces the time delay of the main breaker in the event of a bus fault to minimize the released energy. Additionally, ZSI provides a more rapid response of the main breaker thus protecting the bus and the associated equipment. The ZSI function behaves in a selective manner if the fault is in the feeder in comparison to the fault existing in the bus, to minimize the released energy and respond as soon as possible.

Hence the protective function of various embodiments of the instant invention has shown the protective action immediately and graphically for both feeder and bus fault events.

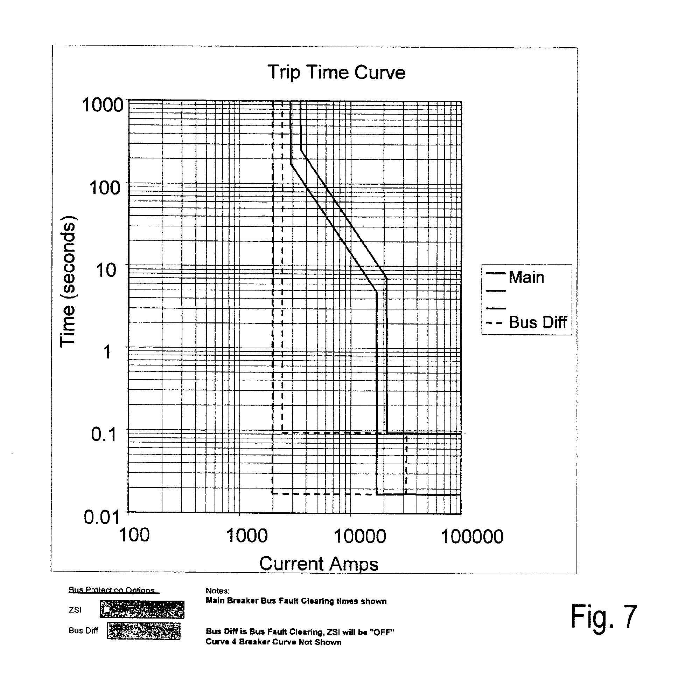

Referring to Fig. 7, the method of various embodiments of the present invention is also described with respect to a bus differential protective function, and is generally referred to in graph 170. Graph 170 displays a scenario with a bus fault, where bus differential isrepresented by curve 175 is clearing the bus fault. Should the fault not be cleared, the main represented by curve 180 will clear the bus fault. The curve of the feeder remains unchanged 185 because the fault is at a higher level than the feeder breaker.

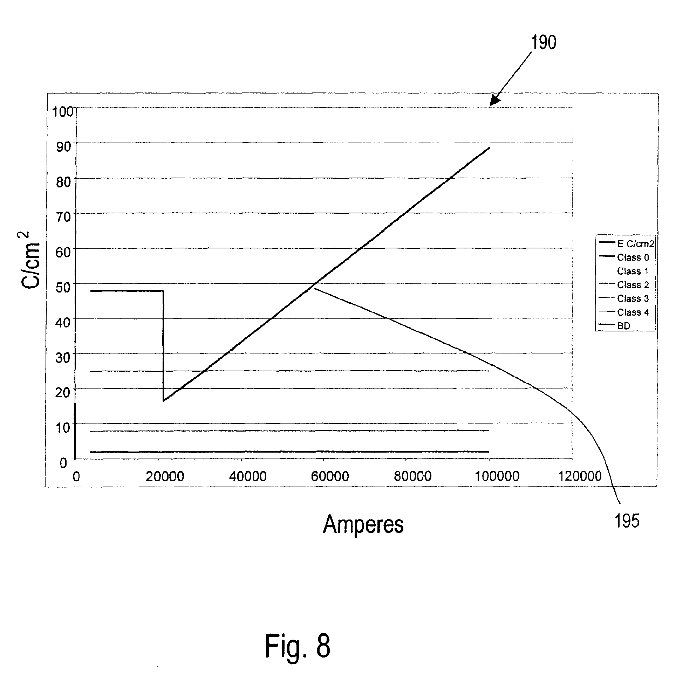

In addition to modifying the response of circuit breakers, the protective function of various embodiments of the instant invention also displays how released incident energy can be reduced in the event of a fault. Referring to Fig. 8, the instant energy of a static protective device is shown and generally referred to in graph 190 at curve 195, during a bus fault. Graph 190 shows incident energy that is being released during the fault event shown at graph 100 of Fig. 4. The incident energy is the amount of energy that is released until the fault is cleared. In the first approximately two seconds of a fault event, the energy is being released and there is no fault protection. Accordingly, the energy at the start of a fault for a static device is high at approximately 48 C/cm². After approximately 2 seconds when the fault is being cleared, the available current is approximately 20K amperes, a relatively high value which correlates to a high class of energy. When the fault is cleared (begins to be cleared) approximately 18000 C/cm² is being released. A high level of energy is being released because the current at the time of clearing is very high, due to the lack of selectivity of the static protective system.

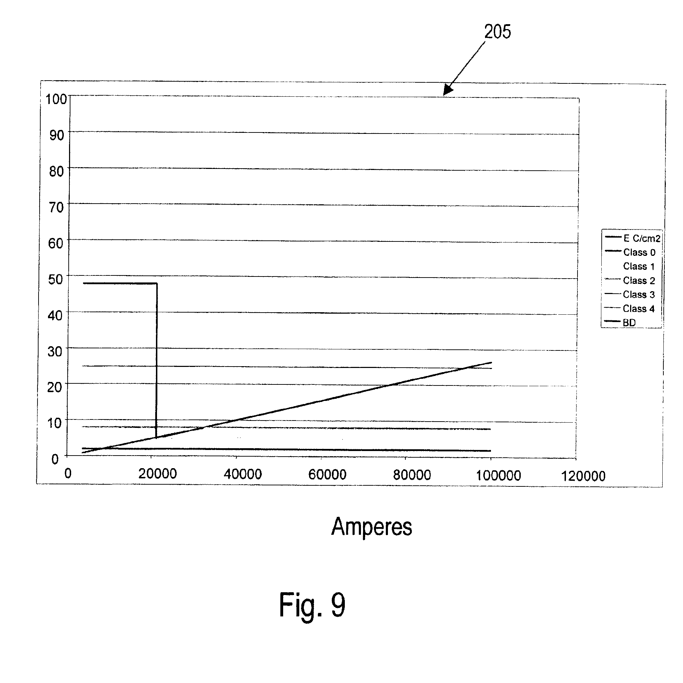

Referring to Fig. 9, the incident energy being released is shown in graph 205 by curve 210 for the adaptive multiple protection function of Fig. 5. Comparing graph 205 of Fig. 9 to graph 190 of Fig. 8, the initial incident energy is identical. However, the current when the fault is being cleared is substantially lower in Fig. 6 than in Fig. 4. In Fig. 6 the current is approximately 3000amps. In Fig. 4, the current is approximately 14Kamps when the fault is being cleared. In Fig. 9, because the current is so much lower when the fault is cleared, the amount of incident energy released is substantially lower as well. The benefit of the bus differential (a fault protection algorithm) is that it provides substantial protection against high energy releases by tripping the bus differential at a low current.

While the instant disclosure has been described with reference to one or more exemplary embodiments, it will be understood by those skilled in the art that various changes may be made and equivalents may be substituted for elements thereof without departing from the scope thereof. In addition, many modifications may be made to adapt a particular situation or material to the teachings of the disclosure without departing from the scope thereof. Therefore, it is intended that the disclosure not be limited to the particular embodiment(s) disclosed as the best mode contemplated for carrying out this invention, but that the invention will include all embodiments falling within the scope of the appended claims.

## Claims

1. A method of protecting a circuit (10, 105) having power switching devices (14, 415, 420), the method comprising:
defining a set of characteristics representing threshold values for power switches in a circuit;
inputting fault conditions that exceed said threshold values;
using algorithms (200) to control a response of said power switches to said fault conditions to protect said circuit;
displaying the response of said power switches to said fault condition, wherein a display represents a protective response of said switching devices controlled by said algorithms.

2. The method of claim 1, wherein said protective response is a selective response of said power switches to protect said circuit in response to different fault conditions.

3. The method of any preceding claim, wherein said power devices are feeder circuit breakers (14), bus circuit breakers (420) and main breakers (415).

4. The method of any preceding claim, wherein the fault conditions and said thresholds are stored on a CCPU (28) and communicated to said power switches and over a network (32) to a microprocessor.

5. The method of any preceding claim, wherein the step of defining said characteristics comprises defining states of the power switching devices (14,415,420) in said circuit, each of said states being either opened or closed.

6. The method of any preceding claim, wherein the step of defining said characteristics further comprises defining power flow configurations for said circuit based (10,105) upon said states of the power switching devices in said circuit.

7. A method of protecting a circuit (10, 105) having power switching devices (14, 415, 420), the method comprising:
defining a plurality of sets of threshold values for said switching devices,
inputting values of different fault conditions that exceed each of said plurality of threshold values to generate a different fault condition;
using algorithms (200) to change how said power switching devices
respond to values of said different fault conditions;
displaying a response of said switching devices depending upon said
different fault conditions using said algorithms, wherein said response is a protective response of said switching devices controlled by said algorithms.

8. The method of claim 7, wherein each of said plurality of sets represents a different set of threshold values for said power switching devices (14,415,420).

9. The method of claim 7 or claim 8, wherein said power devices are feeder circuit breakers (14), bus circuit breakers (420) and main breakers (415).

10. The method of any of claims 7 to 9, wherein the fault conditions and said thresholds are stored on a CCPU (28) and communicated to said power switches and over a network (32) to a microprocessor.
